# EUROPEAN PATENT SPECIFICATION

(11) **EP 4 206 043 B1**
(45) Date of publication and mention of the grant of the patent: **01.01.2025**
(21) Application number: 20960319.0
(22) Date of filing: 05.11.2020
(51) Int. Cl.: B60R 25/10, B60Q 5/00, B60R 11/02, G10K 9/22, B60R 11/00, G08B 3/10

(54) **ANTI-THEFT HORN ASSEMBLY, AND VEHICLE**
DIEBSTAHLSICHERE HUPENANORDNUNG UND FAHRZEUG
ENSEMBLE AVERTISSEUR ANTIVOL ET VÉHICULE

(43) Date of publication of application: 05.07.2023
(73) Proprietor: ZHEJIANG ZEEKR INTELLIGENT TECHNOLOGY CO., LTD., Zhejiang 315336 (CN); Zhejiang Geely Holding Group Co., Ltd., Hangzhou, Zhejiang 310051 (CN)
(72) Inventor: HE, Wei, Hangzhou Bay New District, Ningbo Zhejiang 315336 (CN); FENG, Yongpeng, Hangzhou Bay New District, Ningbo Zhejiang 315336 (CN); WU, Qifeng, Hangzhou Bay New District, Ningbo Zhejiang 315336 (CN); DU, Wenxin, Hangzhou Bay New District, Ningbo Zhejiang 315336 (CN); LI, Guolin, Hangzhou Bay New District, Ningbo Zhejiang 315336 (CN); XU, Yun, Hangzhou Bay New District, Ningbo Zhejiang 315336 (CN)
(74) Representative: Boult Wade Tennant LLP
(86) International application number: PCT/CN2020/126745
(87) International publication number: WO 2022/094858

(56) References cited:
- CN-A- 103 221 261
- CN-A- 110 271 495
- CN-A- 111 247 054
- CN-U- 202 049 732
- CN-U- 203 698 207
- CN-U- 203 933 881
- CN-U- 204 774 592
- JP-A- 2003 058 959
- JP-A- 2004 106 718
- JP-A- 2005 067 488
- JP-A- 2018 079 905
- US-A1- 2012 081 217

## Description

### TECHNICAL FIELD

The present invention relates to the automotive technical field and, in particular, to an anti-theft horn assembly and a vehicle.

### BACKGROUND

In recent years, car theft has been rampant, with approximately 3 million vehicles lost worldwide each year, averaging out to one car stolen every 10 seconds. In response to high premiums caused by vehicle loss, certain organizations find anti-theft experts who are familiar with the thieves' methods to invade vehicles without serious damage to vehicles, and then give the rating about the anti-theft performance of vehicles according to the time of invasion as a criterion for assessing the amount of premiums, and the higher the anti-theft coefficient, the lower the corresponding insured amount.

In order to increase the market competitiveness, a high-pitched anti-theft horn is installed in some vehicles, and is triggered when the vehicle is turned on abnormally. Because of the vehicle layout and sound permeability requirements, an anti-theft horn is generally arranged inside the wing of the vehicle body. At present, a mounting structure of which the mounting and protection are separated is generally adopted, and the mounting structure not only has high self-weight and is not conducive to reducing energy consumption, but also has a mounting point which is exposed to the inner side of the wing. Although the horn cannot be seen at the exterior of the vehicle body, thieves can remove the horn by a simple tool as long as finding the position of the horn, and then pry open the door lock. Without the alarm of the high-pitched horn, thieves have enough time to crack other anti-theft systems.

JP 2004106718A discloses an attachment structure for an automobile horn, which can ensure a predetermined sound pressure and can suppress the occurrence of rust even if the attachment position of the horn is a position where the sound pressure is difficult to be ensured and which is exposed to the rain water in large amounts, such as the back side of an auxiliary running lump attachment hole disposed in a lower portion of a vehicle body. In the attachment structure of an automobile horn, which is attached to a vehicle body via an attachment bracket, this attachment bracket includes a horn attaching part to which the automobile horn is joined and fixed, a projecting part which covers the upper portion of the automobile horn joined and fixed to the horn attaching part, a reflecting part which covers the back face side of the automobile horn joined and fixed to the horn attaching part at a predetermined interval, and a joining part which joins and fixes this attachment bracket to the vehicle body. The reflecting part and joining part of the attachment bracket are integrally formed or the horn attaching part and joining part of the attachment bracket are integrally formed. Further, a flange protruded along a stay member of the automobile horn is formed on the attachment bracket.

### SUMMARY

The invention is set out in the appended set of claims. The purpose of the present invention is to provide a simple structural and lightweight anti-theft horn assembly, which can prevent thieves from damaging the anti-theft horn without opening a vehicle door, and can improve the anti-theft level of a vehicle.

To solve the above technical problems, the present invention discloses an anti-theft horn according to claim 1.

Optionally, the first fixing part is provided with a first fixing hole, and the first fixing part is fixedly connected to the vehicle cabin by a bolt and the first fixing hole.

Optionally, the second fixing part is provided with a second fixing hole, and the second fixing part is fixedly connected to the vehicle wing mounting bracket by a bolt and the second fixing hole.

Optionally, the anti-theft horn mounting part is provided with a horn fixing hole, and the anti-theft horn is fixedly connected to the anti-theft horn mounting part by a bolt and the horn fixing hole.

Optionally, the anti-theft horn mounting section is further provided with a horn positioning hole.

Optionally, the substrate is provided with a plurality of sound leakage holes corresponding to the anti-theft horn.

Optionally, the substrate is provided with a wire harness through-hole for arranging a wire harness of the anti-theft horn.

Optionally, the substrate is further provided with a wire harness snap for fixing the wire harness of the anti-theft horn.

Optionally, the substrate is provided with a lightening hole.

The present invention further discloses a vehicle including any of the above anti-theft horn assemblies.

By adopting the above technical solutions, the anti-theft horn assembly and the vehicle described in the present invention have the following beneficial effects:
(1) An anti-theft horn is fixed at an inner side of a vehicle wing by a protection-and-mounting integrated mounting bracket, of which a U-shaped groove structure forms a mounting structure that wraps the anti-theft horn to fix and protect the anti-theft horn and arrange a fixing point of the anti-theft horn inside a vehicle cabin, so that the anti-theft horn cannot be removed or damaged on the premise that the mounting bracket is not removed. Meanwhile, a fixing point of the mounting bracket is set on a vehicle wing mounting bracket, so that the mounting bracket cannot be removed without opening the door, thereby preventing thieves from removing or destroying the anti-theft horn without opening the door, effectively protecting the anti-theft horn, and improving the anti-theft coefficient of the vehicle;
(2) The anti-theft horn and the mounting bracket are normal standard parts, not anti-theft standard parts, thereby facilitating maintaining;
(3) The mounting bracket itself is a design in which both the mounting and protection are integrated, with simple structure and low cost, and is conducive to lightweight body design and energy consumption reduction.

### BRIEF DESCRIPTION OF DRAWINGS

In order to describe the technical solutions in embodiments of the present invention more clearly, the following will make a brief introduction to the drawings needed for describing the embodiments. Apparently, the drawings in the following description are merely some embodiments of the present invention, and persons of ordinary skill in the art may still derive other drawings from these accompanying drawings without creative effort.
FIG. 1 is a schematic structural diagram of an optional anti-theft horn assembly according to an embodiment of the present application.
FIG. 2 is a schematic diagram of an optional anti-theft horn mounting part according to an embodiment of the present application.
FIG. 3 is a cross-sectional view taken along B-B of FIG. 1.
FIG. 4 is a schematic diagram of an application scenario of an optional anti-theft horn assembly according to an embodiment of the present application.
FIG. 5 is a cross-sectional view taken along A-A of FIG. 4.

The following are additional descriptions for the accompanying drawings:
1-Anti-theft horn; 101-Wire harness; 2-Mounting bracket; 201-First fixing part; 201a-First fixing hole; 202-Substrate; 202a-Sound leakage hole; 202b-Wire harness through hole; 202c-Wire harness snap; 202d-Lightening hole; 203-Second fixing hole; 203a-Second fixing hole; 204-Anti-theft horn mounting part; 204a-Horn fixing hole; 204b-horn positioning hole; 3-vehicle wing; 4-vehicle front door; 5-A-pillar of vehicle body; 6-mounting gap.

### DESCRIPTION OF EMBODIMENTS

The technical solutions in embodiments of the present invention will be described clearly and comprehensively below in conjunction with the accompanying drawings in embodiments of the present invention. Apparently, the described embodiments are merely a part rather than all embodiments of the present invention. All other embodiments obtained by persons of ordinary skill in the art based on embodiments of the present invention without creative effort shall fall within the protection scope of the present invention.

Reference herein to "an embodiment" or "embodiment" refers to a particular feature, structure, or characteristic that may be included in at least one embodiment of the present invention. In the description of the present invention, it should be understood that the orientation or positional relationship indicated by the terms "upper", "lower", "top" and "bottom" is based on the orientation or positional relationship shown in the accompanying drawings and is only for convenience of description of the present invention and simplification of description, not to indicate or imply that the mentioned device or element must have a particular orientation, be constructed and operated in a particular orientation, and therefore is not to be construed as limiting the invention. In addition, the terms "first" and "second" are used for descriptive purposes only and are not to be understood as indicating or implying relative importance or as implicitly specifying the number of the mentioned technical features. Thus, the features defined by "first" and "second" may explicitly or implicitly include one or more of the features. Moreover, the terms "first" and "second" are used to distinguish similar objects and are not necessary to describe a particular order or sequence. It should be understood that the data so used may be interchanged under appropriate circumstances, so that embodiments of the present invention described herein may be implemented in an order other than those illustrated or described herein.

In recent years, car theft has been rampant in Europe and North America, and in response to the high premiums caused by vehicle loss, non-profit insurance organizations have emerged to assess the anti-theft performance of vehicles, such as Thatcham Institute, a non-profit group in the British insurance industry, which conducts insurance assessments for all new cars put into the UK and Sweden. This organization will find anti-theft experts who are familiar with the thieves' methods to invade vehicles without serious damage to the vehicles, and then give the rating about the anti-theft performance of the vehicles according to the time of invasion as a criterion for assessing the amount of premiums, the higher the anti-theft coefficient, the lower the corresponding insured amount, in which an intrusion time of 2 minutes or more is high, 1 to 2 minutes is medium, and less than 1 minute is low.

In order to improve the anti-theft coefficient of vehicles and increase the competitiveness in the European market, some vehicles choose to be installed with high-pitched anti-theft horn, which triggers the anti-theft horn to alarm when the vehicle is turned on abnormally. Because of the vehicle layout and sound permeability requirements, the anti-theft horn is generally arranged inside the wing of the vehicle body. A mounting structure of which the mounting and protection are separated is generally adopted to fix the anti-theft horn, and the mounting structure not only has high self-weight, but also has a mounting point which is exposed to the inner side of the wing. Although the horn cannot be seen at the exterior of the vehicle body, by that time thieves can remove the horn by a simple tool as long as finding the position of the horn. There may be anti-theft effect for the thieves who commit a crime for the first time, but there may be no effect for thieves who commit a crime for the second time (are slightly experienced) or know the structure. In addition, if an anti-theft fastener is used for anti-theft, the operation difficulty of disassembly and maintenance will be increased.

In view of the above defects in the prior art, embodiments of the present application provide an anti-theft horn assembly and a vehicle that can prevent thieves from damaging the anti-theft horn without opening the vehicle door and improve the anti-theft level of the vehicle.

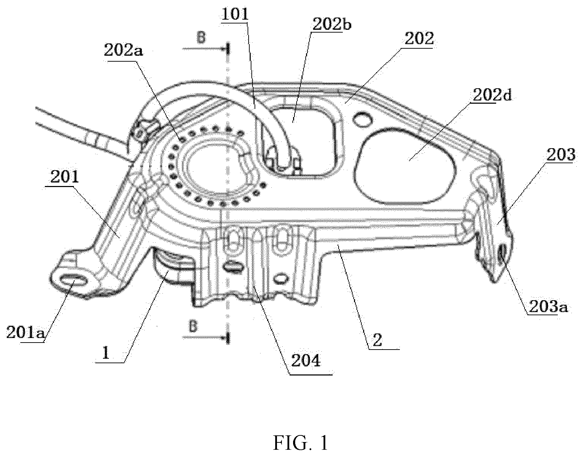

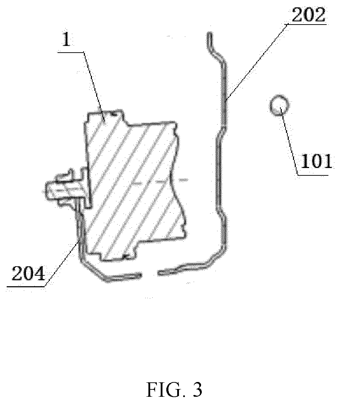

Referring to FIGS. 1-3, FIG. 1 is a schematic structural diagram of an optional anti-theft horn assembly according to an embodiment of the present application. FIG. 1 includes an anti-theft horn 1 and a mounting bracket 2, where the mounting bracket 2 is configured to fix the anti-theft horn 1 at an inner side of a vehicle wing;
where the mounting bracket 2 includes a first fixing part 201, a substrate 202, a second fixing part 203, and an anti-theft horn mounting part 204;
the first fixing part 201 is located at a first end of the substrate 202 for fixedly connecting with a vehicle cabin;
a second fixing part 203 is located at a second end of the substrate 202 for fixedly connecting with a vehicle wing mounting bracket;
the anti-theft horn mounting part 204 is located at an inner side of the substrate 202, and forms a U-shaped groove structure with the substrate 202 as shown in FIG. 3, and the anti-theft horn 1 is mounted in the U-shaped groove structure.

An anti-theft horn is fixed at an inner side of a vehicle wing through a protection-and-mounting integrated mounting bracket, of which a U-shaped groove structure forms a mounting structure that wraps the anti-theft horn to fix and protect the anti-theft horn and hidden a fixing point of the anti-theft horn in a vehicle cabin. Therefore, the anti-theft horn cannot be removed or damaged on the premise that the mounting bracket is not removed. Meanwhile, a fixing point of the mounting bracket is set on a vehicle wing mounting bracket, so that the mounting bracket cannot be removed without opening the door, thereby preventing thieves from removing or destroying the anti-theft horn without opening the door, effectively protecting the anti-theft horn, and improving the anti-theft coefficient of the vehicle.

As an optional embodiment, the first fixing part 201 shown in FIG. 1 is provided with a first fixing hole 201a, and the first fixing part 201 is fixedly connected to the vehicle cabin by a bolt and the first fixing hole 201a.

It should be noted that there is no special limitation on the connection mode between the first fixing part 201 and the vehicle cabin, which can be a bolt fixing mode as described above or other connection modes, as long as it can achieve the purpose of fixedly connecting the mounting bracket 2 to the vehicle cabin, where the connection mode is preferably detachable connection, thereby facilitating the removal and maintenance of the anti-theft horn.

As an optional embodiment, the second fixing part 203 shown in FIG. 1 is provided with a second fixing hole 203a, and the second fixing part 203 is fixedly connected to the vehicle wing mounting bracket by a bolt and the second fixing hole 203a.

It should be noted that there is no special limitation on the connection mode between the second fixing part 203 and the vehicle wing mounting bracket, which can be a bolt fixing mode as described above or other connection modes, as long as it can achieve the purpose of fixedly connecting the mounting bracket 2 to the vehicle wing mounting bracket, where the connection mode is preferably detachable connection, thereby facilitating the removal and maintenance of the anti-theft horn.

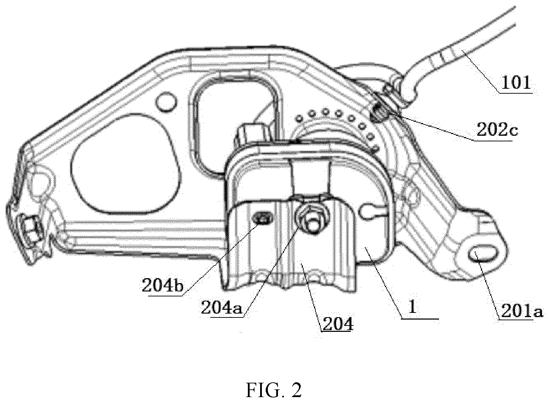

As an optional embodiment, the anti-theft horn mounting part 204 shown in FIG. 1 is provided with a horn fixing hole 204a (shown with FIG. 2), and the anti-theft horn 1 is fixedly connected to the anti-theft horn mounting part 204 by a bolt and the horn fixing hole 204a.

It should be noted that there is no special limitation on the connection mode between the anti-theft horn 1 and the anti-theft horn mounting part 204, which can be a bolt fixing mode as described above or other connection modes, as long as it can achieve the purpose of fixedly connecting the anti-theft horn 1 to the mounting bracket 2, where the connection method is preferably detachable connection, thereby facilitating the removal and maintenance of the anti-theft horn.

As an optional embodiment, the anti-theft horn mounting part 204 shown in FIG. 1 is further provided with a horn positioning hole 204b, and accordingly, the anti-theft horn 1 should be provided with a positioning part corresponding to the positioning hole 204b, so that the anti-theft horn 1 can be quickly positioned to find a mounting point, thereby facilitating the mounting of the anti-theft horn 1.

As an optional embodiment, the substrate 202 shown in FIG. 1 is provided with a plurality of sound leakage holes 202a corresponding to the anti-theft horn 1 to meet the sound transmission requirements.

It should be noted that there is no special limitation on the number and the specific arrangement scheme of the sound leakage holes 202a, the arrangement scheme of forming a ring can be used as shown in FIG. 1, or other arrangement schemes can be used, as long as it can achieve the effect of improving sound transmission.

As an optional embodiment, the substrate 202 shown in FIG. 1 is provided with a wire harness through-hole 202b for arranging a wire harness 101 of the anti-theft horn 1.

As an optional implementation, the substrate 202 shown in FIG. 1 is also provided with a wire harness snap 202c for fixing the wire harness 101 of the anti-theft horn 1.

As an optional embodiment, the substrate 202 shown in FIG. 1 is provided with a lightening hole 202d.

It should be noted that there is no special limitation on the number and specific shape of the lightening hole 202d, as long as it can achieve the purpose of weight reduction and ensure the structural strength of the mounting bracket.

As an optional embodiment, the mounting bracket 2 shown in FIG. 1 is integrally formed by stamping a sheet metal.

In the specific embodiment, the thickness of the sheet metal of the mounting bracket 2 is 1mm~1.4mm, preferably 1.2mm, which is not coupled with the vehicle body and the horn frequency, and meets the requirements of rigidity and NVH mode.

Embodiments of the present application also provide a vehicle including any of the above anti-theft horn assemblies.

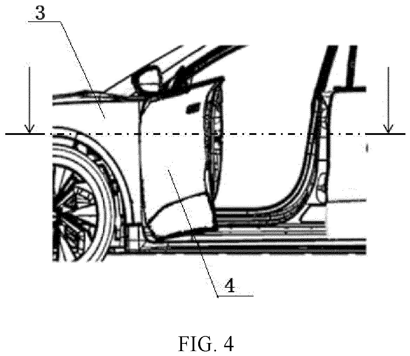

FIG. 4 is a schematic diagram of an application scenario of an anti-theft horn assembly according to an embodiment of the present application. As shown in FIG. 4, a vehicle front door 4 is open; if a mounting method of the prior art is adopted, an anti-theft horn is mounted at an inner side of a vehicle wing 3, thieves can enter the inner side of the vehicle wing from a wheel without opening a vehicle door by dismounting an inner plate of a wheel cover to damage or remove the exposed anti-theft horn, and after the threat of the anti-theft horn is removed, more time is gained to crack other anti-theft systems.

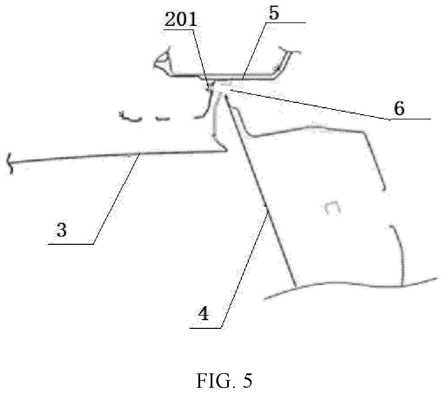

If the anti-theft horn assembly of the present application is adopted, the anti-theft horn 1 is fixed at the inside of the vehicle wing 3 through the mounting bracket 2, where the anti-theft horn mounting part 204 forms a protective structure that wraps the anti-theft horn 1, so that the anti-theft horn 1 is not exposed to the inside of the vehicle wing 3, and the fixing point of the anti-theft horn 1 is not exposed either. Therefore, on the premise that the mounting bracket 2 is not removed, the anti-theft horn 1 cannot be removed or destroyed. In addition, the second fixing part 203 of the mounting bracket 2 is fixed to the mounting bracket of the vehicle wing 3, and the special fixing point makes it necessary to open the vehicle door before the removal of the second fixing part 203, and then remove the first fixing part 201 from a mounting gap 6 formed by the vehicle front door 4 and an A-pillar 5 of the vehicle body (shown with FIG. 5). Therefore, thieves cannot remove or destroy the anti-theft horn 1 without opening the vehicle door. If a thief wants to destroy the anti-theft horn 1, he must remove the mounting bracket 2 first, however, the mounting bracket 2 must be removed by opening the vehicle front door 4, separating a liner plate of the wing, and removing the mounting bracket 2 from the mounting gap 6. The above actions cannot be completed within 2 minutes, and lock picking will cause the anti-theft horn 1 to alarm, and the above actions are even more impossible to complete in the buzzing sound of the anti-theft horn 1.

By adopting the above technical solutions, the anti-theft horn assembly and the vehicle described in the present invention have the following beneficial effects:
(1) An anti-theft horn is fixed at an inner side of a vehicle wing by a protection-and-mounting integrated mounting bracket, of which a U-shaped groove structure forms a mounting structure that wraps the anti-theft horn to fix and protect the anti-theft horn and hidden a fixing point of the anti-theft horn inside a vehicle cabin, so that the anti-theft horn cannot be removed or damaged on the premise that the mounting bracket is not removed. Meanwhile, a fixing point of the mounting bracket is set on a vehicle wing mounting bracket, so that the mounting bracket cannot be removed without opening the door, thereby preventing thieves from removing or destroying the anti-theft horn without opening the door, effectively protecting the anti-theft horn, and improving the anti-theft coefficient of the vehicle;
(2) The anti-theft horn and the mounting bracket are normal standard parts, not anti-theft standard parts, thereby facilitating maintaining;
(3) The mounting bracket itself is a design in which both the mounting and protection are integrated, with simple structure and low cost, and is conducive to lightweight body design and energy consumption reduction.

## Claims

1. An anti-theft horn assembly, comprising an anti-theft horn (1) and a mounting bracket (2), wherein the mounting bracket (2) is configured to fix the anti-theft horn (1) at an inner side of a vehicle wing;
the mounting bracket (2) comprises a first fixing part (201), a substrate (202), a second fixing part (203), and an anti-theft horn mounting part (204);
the first fixing part (201) is located at a first end of the substrate (202) for fixedly connecting with a vehicle cabin;
the second fixing part (203) is located at a second end of the substrate (202) for fixedly connecting with a vehicle wing mounting bracket; and
wherein the anti-theft horn mounting part (204) is located at an inner side of the substrate (202) and forms a U-shaped groove structure with the substrate (202), and the anti-theft horn (1) is located in the U-shaped groove structure, and is fixedly connected to the anti-theft horn mounting part (204) and is spaced from the inner side of the substrate (202).

2. The anti-theft horn assembly according to claim 1, wherein the first fixing part (201) is provided with a first fixing hole (201a), and the first fixing part (201) is fixedly connected to the vehicle cabin by a bolt and the first fixing hole (201a).

3. The anti-theft horn assembly according to claim 1, wherein the second fixing part (203) is provided with a second fixing hole (203a), and the second fixing part (203) is fixedly connected to the vehicle wing mounting bracket by a bolt and the second fixing hole (203a).

4. The anti-theft horn assembly according to claim 1, wherein the anti-theft horn mounting part (204) is provided with a horn fixing hole (204a), and the anti-theft horn (1) is fixedly connected to the anti-theft horn mounting part (204) by a bolt and the horn fixing hole (204a).

5. The anti-theft horn assembly according to claim 4, wherein the anti-theft horn mounting section (204) is further provided with a horn positioning hole (204b).

6. The anti-theft horn assembly according to claim 1, wherein the substrate (202) is provided with a plurality of sound leakage holes (202a) corresponding to the anti-theft horn (1).

7. The anti-theft horn assembly according to claim 1, wherein the substrate (202) is provided with a wire harness through-hole (202b) for arranging a wire harness of the anti-theft horn (1).

8. The anti-theft horn assembly according to claim 7, wherein the substrate (202) is further provided with a wire harness snap (202c) for fixing the wire harness of the anti-theft horn (1).

9. The anti-theft horn assembly according to claim 1, wherein the substrate (202) is provided with a lightening hole (202d).

10. A vehicle comprising the anti-theft horn assembly according to any one of claims 1 to 9.

## Patentansprüche

1. Diebstahlsichere Hupenanordnung, die eine diebstahlsichere Hupe (1) sowie eine Halterung (2) umfasst, wobei die Halterung (2) zur Befestigung der diebstahlsicheren Hupe (1) an einer Innenseite des Kotflügels eines Fahrzeugs konfiguriert ist;
wobei die Halterung (2) ein erstes Befestigungsteil (201), einen Träger (202), ein zweites Befestigungsteil (203) sowie ein Anbauteil (204) für die diebstahlsichere Hupe umfasst;
wobei das erste Befestigungsteil (201) an einem ersten Ende des Trägers (202) zur festen Verbindung mit einem Fahrzeuginnenraum angeordnet ist;
wobei das zweite Befestigungsteil (203) an einem zweiten Ende des Trägers (202) zur festen Verbindung mit einer Kotflügelhalterung des Fahrzeugs angeordnet ist; und
wobei das Anbauteil (204) für die diebstahlsichere Hupe an einer Innenseite des Trägers (202) angeordnet ist und eine U-förmige Rillenstruktur mit dem Träger (202) bildet, und wobei die diebstahlsichere Hupe (1) in der U-förmigen Rillenstruktur angeordnet ist und fest mit dem Anbauteil (204) für die diebstahlsichere Hupe verbunden ist und von der Innenseite des Trägers (202) beabstandet ist.

2. Diebstahlsichere Hupenanordnung nach Anspruch 1, wobei das erste Befestigungsteil (201) mit einem ersten Befestigungsloch (201a) versehen ist, und wobei das erste Befestigungsteil (201) durch eine Schraube und das erste Befestigungsloch (201a) fest mit dem Fahrzeuginnenraum verbunden ist.

3. Diebstahlsichere Hupenanordnung nach Anspruch 1, wobei das zweite Befestigungsteil (203) mit einem zweiten Befestigungsloch (203a) versehen ist, und wobei das zweite Befestigungsteil (203) durch eine Schraube und das zweite Befestigungsloch (203a) fest mit der Kotflügelhalterung des Fahrzeugs verbunden ist.

4. Diebstahlsichere Hupenanordnung nach Anspruch 1, wobei das Anbauteil (204) für die diebstahlsichere Hupe mit einem Hupen-Befestigungsloch (204a) versehen ist, und wobei die diebstahlsichere Hupe (1) durch eine Schraube und das Hupen-Befestigungsloch (204a) fest mit dem Anbauteil (204) für die diebstahlsichere Hupe verbunden ist.

5. Diebstahlsichere Hupenanordnung nach Anspruch 4, wobei das Anbauteil (204) für die diebstahlsichere Hupe weiter mit einem Hupen-Positionierloch (204b) versehen ist.

6. Diebstahlsichere Hupenanordnung nach Anspruch 1, wobei der Träger (202) mit einer Vielzahl von Schalllöchern (202a) versehen ist, die der diebstahlsicheren Hupe (1) entsprechen.

7. Diebstahlsichere Hupenanordnung nach Anspruch 1, wobei der Träger (202) mit einem Kabelbaum-Durchgangsloch (202b) zum Anordnen eines Kabelbaums der diebstahlsicheren Hupe (1) versehen ist.

8. Diebstahlsichere Hupenanordnung nach Anspruch 7, wobei der Träger (202) weiter mit einer Kabelbaum-Einrastung (202c) zur Befestigung des Kabelbaums der diebstahlsicheren Hupe (1) versehen ist.

9. Diebstahlsichere Hupenanordnung nach Anspruch 1, wobei der Träger (202) mit einem Erleichterungsloch (202d) versehen ist.

10. Fahrzeug, das die diebstahlsichere Hupenanordnung nach einem der Ansprüche 1 bis 9 umfasst.

## Revendications

1. Ensemble avertisseur antivol, comprenant un avertisseur antivol (1) et un support de montage (2), dans lequel le support de montage (2) est configuré pour fixer l'avertisseur antivol (1) au niveau d'un côté intérieur d'une aile de véhicule ;
le support de montage (2) comprend une première partie de fixation (201), un substrat (202), une seconde partie de fixation (203) et une partie de montage d'avertisseur antivol (204) ;
la première partie de fixation (201) est située au niveau d'une première extrémité du substrat (202) pour une liaison fixe avec une cabine de véhicule ;
la seconde partie de fixation (203) est positionnée à une seconde extrémité du substrat (202) pour une liaison fixe avec un support de montage d'aile de véhicule ; et
dans lequel la partie de montage d'avertisseur antivol (204) est située au niveau d'un côté intérieur du substrat (202) et forme une structure de rainure en forme de U avec le substrat (202), et l'avertisseur antivol (1) est située dans la structure de rainure en forme de U, et est reliée de manière fixe à la partie de montage d'avertisseur antivol (204) et est espacée du côté intérieur du substrat (202).

2. Ensemble avertisseur antivol selon la revendication 1, dans lequel la première partie de fixation (201) est pourvue d'un premier trou de fixation (201a), et la première partie de fixation (201) est reliée de manière fixe à l'habitacle de véhicule par un boulon et le premier trou de fixation (201a).

3. Ensemble avertisseur antivol selon la revendication 1, dans lequel la seconde partie de fixation (203) est pourvue d'un second trou de fixation (203a), et la seconde partie de fixation (203) est reliée de manière fixe au support de montage d'aile de véhicule par un boulon et le second trou de fixation (203a).

4. Ensemble avertisseur antivol selon la revendication 1, dans lequel la partie de montage d'avertisseur antivol (204) est pourvue d'un trou de fixation d'avertisseur (204a), et l'avertisseur antivol (1) est relié de manière fixe à la partie de montage d'avertisseur antivol (204) par un boulon et le trou de fixation d'avertisseur (204a).

5. Ensemble avertisseur antivol selon la revendication 4, dans lequel la section de montage d'avertisseur antivol (204) est en outre pourvue d'un trou de positionnement d'avertisseur (204b).

6. Ensemble avertisseur antivol selon la revendication 1, dans lequel le substrat (202) est pourvu d'une pluralité de trous de fuite de son (202a) correspondant à l'avertisseur antivol (1).

7. Ensemble avertisseur antivol selon la revendication 1, dans lequel le substrat (202) est pourvu d'un trou traversant de faisceau de câbles (202b) pour agencer un faisceau de câbles de l'avertisseur antivol (1).

8. Ensemble avertisseur antivol selon la revendication 7, dans lequel le substrat (202) est en outre pourvu d'un encliquetage de faisceau de fils (202c) pour fixer le faisceau de fils de l'avertisseur antivol (1).

9. Ensemble avertisseur antivol selon la revendication 1, dans lequel le substrat (202) est muni d'un trou d'allégement (202d).

10. Véhicule comprenant l'ensemble avertisseur antivol selon l'une quelconque des revendications 1 à 9.
